# EUROPÄISCHE PATENTSCHRIFT

(11) **EP 1 527 286 B1**
(45) Veröffentlichungstag und Bekanntmachung des Hinweises auf die Patenterteilung: **04.10.2006**
(21) Anmeldenummer: 03790853.0
(22) Anmeldetag: 04.08.2003
(51) Int. Cl.: F16C 35/063, B21H 1/12

(54) **EINRICHTUNG UND VERFAHREN ZUR AXIALEN POSITIONIERUNG EINES BAUTEILS AN EINER WELLE**
DEVICE AND METHOD FOR THE AXIAL POSITIONING OF A COMPONENT ON A SHAFT
SYSTEME ET PROCEDE DE POSITIONNEMENT AXIAL D'UN COMPOSANT SUR UN ARBRE

(30) Priorität: 09.08.2002 DE 10236701
(43) Veröffentlichungstag der Anmeldung: 04.05.2005
(73) Patentinhaber: MINEBEA Co., Ltd., Kitasaku-gun, Nagano-ken 3849-2100 (JP)
(72) Erfinder: KREIENSEN, Ullrich, 78652 Deisslingen (DE); GANTER, Helmut, 78073 Bad Dürrheim (DE)
(74) Vertreter: Liesegang, Eva
(86) Internationale Anmeldenummer: PCT/EP2003/008620
(87) Internationale Veröffentlichungsnummer: WO 2004/020857

(56) Entgegenhaltungen:
- US-A- 3 498 095
- US-A1- 2002 006 240
- US-B1- 6 276 838

## Beschreibung

Die Erfindung betrifft ein Verfahren zum Herstellen eines Anschlags zur axialen Positionierung eines Bauteils an einer Welle.

Ein Solches Verfahren ist z.B aus den Dokument US 4 574 448 bekannt.

Die Erfindung betrifft allgemein das Gebiet der elektronisch kommutierten, bürstenlosen Gleichstrommotoren, die als Innenläufermotoren oder Außenläufermotoren konfiguriert sein können. Insbesondere betrifft die Erfindung einen Innenläufermotor mit einer Welle, einer Rotorbaugruppe, die einen oder mehrere auf der Welle angeordnete Permanentmagneten aufweist, und mit einer Statorbaugruppe, die einen z.B. aus Blechen aufgebauten Statorkörper und Phasenwicklungen umfaßt. Zwei Lager sind mit axialem Abstand an der Welle, auf der selben Seite des/der Rotormagneten angeordnet, um die Rotorbaugruppe relativ zu der Statorbaugruppe einseitig zu lagern. Diese Motorbauweise, bei der die Lagerung der Welle ausschließlich auf einer Seite der Rotorbaugruppe erfolgt, wird auch als Cantilever-Design bezeichnet. Der Motor umfaßt ferner eine Sensorvorrichtung zur Erfassung einer Größe, die bezogen ist auf Drehlage, Drehzahl und/oder Drehmoment der Rotorbaugruppe relativ zur Statorbaugruppe. Die Sensorvorrichtung umfaßt beispielsweise einen Positionssensor.

Der Gleichstrommotor ist für Anwendungen im Automobilbereich bestimmt, z.B. zur Unterstützung der Lenkung oder zum Antreiben einer Kühlwasserpumpe eines Kraftfahrzeuges. Solche Motoren kommen häufig im Verbrennungsmotorraum zum Einsatz, wo sie hohen Umgebungstemperaturen, Verschmutzung, Spritzwasser und dergleichen sowie starken Vibrationen ausgesetzt sind. Die Motoren müssen daher gegen diese äußeren Einflüsse geschützt und möglichst robust aufgebaut sein.

Einseitig gelagerte Motoren sind häufig so aufgebaut, daß die Welle in einem Motorflansch gelagert ist. Das freie Ende der Welle und somit des Rotors ist einer stirnseitigen Abdeckung des Motors zugewandt, bei der sich Anschlüsse für Stromversorgung und Signalleitungen befinden. Elektronisch kommutierte Gleichstrommotoren weisen in der Regel einen Sensor zur Erfassung der Drehlage des Rotors relativ zum Stator auf, um daraus das Kommutierungssignal abzuleiten. Bei einseitig gelagerten Motoren ist dieser Sensor im Stand der Technik üblicherweise bei dem freien Rotorende des Motors angebracht, da dieses frei zugänglich ist, nahe bei den externen Anschlüssen liegt und daher eine einfache Montage erlaubt.

Von der Anmelderin der vorliegenden Patentanmeldung wurde daher in einer parallelen Patenanmeldung vom selben Anmeldetag, mit dem Titel "Gleichstrommotor" vorgeschlagen, die Sensorvorrichtung im Bereich der Welle zwischen den beiden Lagern anzuordnen. Die beiden Lager sind insbesondere in einem Flansch oder einer Grundplatte des Motors montiert, der mit einem Stirnende der Statorbaugruppe verbunden ist. Für den Einbau der Sensorvorrichtung zwischen den beiden Lagern wurde eine Position für das Sensorsystem gefunden, bei der die geringsten Lageabweichungen der Welle in radialer Richtung auftreten.

Für die Funktion des Gleichstrommotors im allgemeinen ist es entscheidend, daß die Rotorbaugruppe und die Statorbaugruppe in radialer und axialer Richtung relativ zueinander präzise positioniert sind. Für die Sensorvorrichtung gilt im speziellen, daß diese mit geringsten Toleranzen nicht nur in radialer, sondern auch in axialer Richtung relativ zu einem Signalgeber positioniert sein muß, der beispielsweise an der Welle angebracht ist.

Aus dem Stand der Technik sind verschiedene Arten zur Definition der axialen Lagerposition bekannt. Beispielsweise kann an einem Drehteil ein Absatz hergestellt werden, der eine axiale Verschiebung verhindert. Es ist auch bekannt, einen Sicherungsring in eine Nut auf der Welle einzurasten. Auch können beispielsweise Sprengringe oder Drehringe an der Welle angebracht werden, um einen axialen Anschlag für die Positionierung von Lagern oder anderen Bauteilen auf der Welle vorzusehen. Aus dem Stand der Technik ist es ferner bekannt, einen angedrehten Flansch zur Positionierung von Lagern einzusetzen. Die Lösungen des Standes der Technik haben den Nachteil, daß sie zusätzliche Komponenten und Montageschritte zur Realisierung des axialen Anschlags zur lagegenauen Montage der Welle und/oder eine Welle mit einer Ausgangsdicke benötigen, die größer ist als der endgültige Durchmesser der Welle. Dadurch erhöhen sich insgesamt Aufwand und Kosten für die Montage des Gleichstrommotors.

Die DE 199 61 289 A1 offenbart eine Welle mit einem lagegesicherten Bauteil, bei der eine zunächst zylindrische Wellenoberfläche plastisch verformt wird, indem ein kreisscheibenförmiges Werkzeug eine Vertiefung im Sinne einer Einschnürung an der Welle bildet, wodurch gleichzeitig wulstartige Erhebungen entstehen. Ein ähnliches Verfahren wird für eine Wellen-Naben-Verbidung in der WO 99/30049 (nächstliegender Stand der Technik) vorgeschlagen. Darin ist beschrieben, daß eine Erhebung durch Rollen einer Ringnut unmittelbar vor der Erhebung erzeugt wird. In einer alternativen Ausführung wird das Stemmwerkzeug in die Wellenoberfläche eingedrückt, und eine Erhebung wird unter Erzeugung der Vertiefung ausgehoben, so daß sich das Material unter plastischer Verformung als Erhebung an der Axialfläche des Nabenteils anlegt. Ein weiteres ähnliches Verfahren wird in der DE 33 26 491 A1 beschrieben. Zur Befestigung von Maschinenteilen, beispielsweise eines Kugellagers, auf einer Welle werden Stemmwerkzeuge schräg zur Oberfläche der Welle angeordnet und pressen durch schräges Eindringen in das Material der Welle gegen die Seitenfläche des Maschinenteils, so daß sich das Material sowohl radial aufwirft als auch axial verschoben wird und gegen das Maschinenteil zu liegen kommt.

Die DE 491 362 beschreibt ein Verfahren zur Befestigung eines Wälzlagers auf einer Welle, bei dem eine Nut in die Welle eingedreht wird und ein Rand der Nut gegen den Lagerinnenring umgebördelt wird.

Die Verfahren des Standes der Technik haben den Nachteil, daß die Erhebungen jeweils gegen Maschinenteile, beispielsweise gegen ein Kugellager, ausgebildet werden, so daß nicht definierte Kräfte auf dieses Maschinenteil wirken. Ferner ist zum Einpressen des Verstemmwerkzeuges in die Wellenoberfläche und Verschieben des verdrängten Materials in axialer Richtung ein erheblicher Kraftaufwand notwendig.

Es ist eine Aufgabe der Erfindung, ein Verfahren zum Herstellen eines Anschlags zur spielfreien, axialen Positionierung eines Bauteils an einer Welle eines Gleichstrommotor der eingangs beschriebenen Art anzugeben, die mit einem Minimum an zusätzlichen Bauteilen auskommen und möglichst kostengünstig sind.

Diese Aufgabe wird durch ein Verfahren gemäß Anspruch 1 gelöst.

Die Erfindung betrifft ein Verfahren zum Herstellen einer zum Herstellen eines Anschlags zur axialen Positionierung eines Bauteiles an einer Welle, bei der mehrere Vorsprünge durch Materialaufwurf gebildet werden, der durch räumlich begrenzte plastische Verformung an der Welle erzeugt wird. Die Vorsprünge dienen als ein formschlüssiger Anschlag zur Positionierung des auf der Welle zu montierenden Bauteils. Eine Entstehung von Spänen kann ausgeschlossen werden. Zur Ausbildung der Vorsprünge ist ein Halterungs- und Führungsblock vorgesehen.

Vorzugsweise sind die Vorsprünge auf dem Umfang der Welle gleichmäßig verteilt. Mithilfe der Vorsprünge ist eine spielfreie Fixierung und Positionierung der Lager an der Welle möglich. Dies ist entscheidend für eine präzise Positionierung der Welle in axialer Richtung.

Die Welle muß in dem Motor spielfrei, mit minimalen axialen Toleranzen in einer definierten und reproduzierbaren Position montiert werden, um insbesondere die Lagegenauigkeit des Signalgebers auf der Welle relativ zu dem Sensor sicherzustellen.

Die Erfindung hat den zusätzlichen Vorteil, daß keine bestimmte Montagereihenfolge eingehalten werden muß und daß bei der Ausbildung der Anschläge bereits in einem früheren Arbeitsgang montierte Komponenten auf der Welle vorhanden sein können. Hierbei kann es sich sogar um empfindliche Bauteile, wie Kugellager oder Magnetringe, handeln.

Ein Bauteil das mittels der beschriebenen Anschläge auf der Welle axial positioniert wird, kann auf seiner von den Anschlägen abgewandten Seite beispielsweise durch eine Zahnscheibe, die auf die Welle aufgeschoben wird, oder dergleichen fixiert werden.

In einer in der Praxis zweckmäßigen Ausgestaltung der Erfindung ist auf dem Umfang der Welle eine umlaufende Nut ausgebildet, wobei die Vorsprünge an einer Seitenkante der Nut gebildet werden.

Bei dem erfindungsgemäßen Verfahren werden die Vorsprünge beispielsweise mit einem Werkzeug hergestellt, das auf die Seitenkante der Nut einen Preßdruck ausübt und die Seitenkante dadurch verformt. Dieses Werkzeug kann ein Stempel sein, der in einer Halterung für die Welle geführt wird.

Die Erfindung kann in einem Gleichstrommotor eingesetzt werden, bei dem die Sensorvorrichtung im Bereich der Welle zwischen den beiden Lagern angeordnet ist. Für den Einbau der Sensorvorrichtung zwischen den beiden Lagern wurde eine Position für das Sensorsystem gefunden, bei der die geringsten Lageabweichungen der Welle in radialer Richtung auftreten. Durch die Erfindung ist eine präzise Positionierung der Welle auch in axialer Richtung gewährleistet.

Die Erfindung ist im folgenden anhand bevorzugter Ausführungsformen mit Bezug auf die Zeichnungen näher erläutert. In den Figuren zeigen:
- Fig. 1: eine schematische Schnittdarstellung durch einen Gleichstrommotor, in dem die Erfindung zum Einsatz kommen kann;
- Fig. 2: eine schematische Schnittdarstellung der Anordnung aus Flansch und Rotorbaugruppe zur Veranschaulichung wesentlicher Merkmale des Gleichstrommotors;
- Fig. 3: eine schematische Darstellung einer Einrichtung zur Ausbildung einer axialen Positionierhilfe an einer Welle eines Gleichstrommotors;
- Fig. 4: eine Schnittdarstellung durch einen Teil der Einrichtung der Fig. 3;
- Fig. 5: eine schematische perspektivische Darstellung einer Welle, an der Positionierungs-Vorsprünge durch plastische Verformung ausgebildet sind; und
- Fig. 6: eine schematische perspektivische Darstellung einer Welle, auf der ein Kugellager montiert ist.

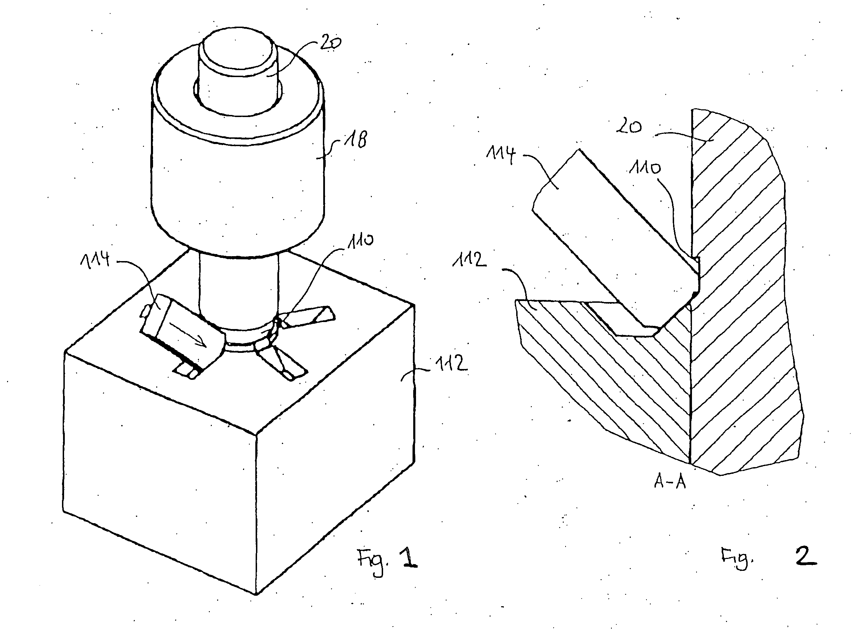

Fig. 1 zeigt eine schematische Schnittdarstellung durch einen bürstenlosen Gleichstrommotor, in dem die Erfindung zum Einsatz kommen kann. Der in Fig. 1 gezeigte Gleichstrommotor umfaßt einen Flansch oder eine Grundplatte 10 zur Befestigung des Motors beispielsweise in einem Kraftfahrzeug. Der Flansch 10 ist drehfest mit einem Stator 12 verbunden, der einen z.B. aus Blechen aufgebauten Statorkörper 14 und Phasenwicklungen 16 umfaßt. Ein Rotor 18 ist drehfest mit einer Welle 20 verbunden und dreht relativ zu dem Flansch 10 und dem Stator 12. Der Rotor 18 umfaßt einen Rotormagneten 22 und einen Eisenrückschluß 24. Der Rotor 18 und die Welle 20 sind über zwei Wälzlager 26, 28 insbesondere Kugellager, in dem Flansch 10 einseitig gelagert.

Ein zylindrisches Motorgehäuse 30 erstreckt sich von dem Flansch 10 zu einem Gehäusedeckel 32 und umgreift den Statorkörper 14. Der Gehäusedeckel 32 weist eine erste Anschlußbuchse 34 für die Stromversorgung des Motors sowie eine zweite Anschlußbuchse 36 für Steuer- und Signalleitungen auf. In der ersten Anschlußbuchse 34 ist ein Anschlußstift 38 angedeutet, der mit einer der Wicklungen 40 verbunden wird. Auf seiner Innenseite weist der Gehäusedeckel 32 einen Relaishalter 42 auf, in dem ein Schaltrelais 44 gehalten ist.

Zwischen den beiden Lagern 26, 28 ist in dem Flansch 10 eine Sensorvorrichtung 46 vorgesehen, die einer Signalgebereinrichtung 48 auf der Welle zugeordnet ist. Bei der gezeigten Ausführungsform ist der Signalgeber 48 durch zwei auf die Welle aufgeprägte Spuren mit Nonius-Strichteilung gebildet, denen ein Positionssensor 46 gegenüberliegt. Die Sensorvorrichtung 46 ist über ein Flachbandkabel 50 mit Anschlüssen (nicht gezeigt) in der zweiten Buchse 36 des Gehäusedeckels 32 verbunden. Das Flachbandkabel 50 ist ein sogenanntes Flex-Kabel mit beispielsweise neuen Leitungen. Es ist durch eine schräg verlaufende Bohrung 52 zwischen den beiden Lagern 26, 28 aus dem Flansch herausgeführt und verläuft an der Außenseite des Statorkörpers 14 zwischen dem Statorkörper und der Wand des Motorgehäuses 30. Die Bohrung 52 ist so geführt, daß sichergestellt ist, daß die Lagersitze im Flansch 10 nicht geschwächt werden.

Wie in Fig. 1 gezeigt, ist die Motorwelle 20 mit dem Rotor 18 darauf über die beiden Lager 26, 28 einseitig in dem Flansch 10 eingespannt, so daß der Rotor 18 gut zugänglich ist. Dies führt jedoch zu den eingangs beschriebenen Problemen der Auslenkung des freien Endes 54 der Welle 20 aufgrund einer Summierung der Toleranzen des radialen Spiels der Lager und der Lagersitze. Zusätzlich kann eine seitliche Beanspruchung der Welle und des Flansches die radiale Auslenkung noch verstärken. Die radiale Ablenkung der Welle 20 an ihrem freien Ende 54 kann so groß werden, daß eine zuverlässige Erfassung der Drehlage an dieser Stelle nicht mehr gewährleistet ist. Es wird daher vorgeschlagen, die Sensorvorrichtung 46 im Bereich des Flansches 10 zwischen den beiden Lagern 26, 28 unterzubringen, wo die radiale Auslenkung der Welle 20 am geringsten ist. Nicht nur ist die mechanische Lagerung des Sensors zwischen den Lagern 26, 28 am stabilsten, in diesem Bereich sind aus den erläuterten Gründen auch die Temperaturschwankungen am geringsten.

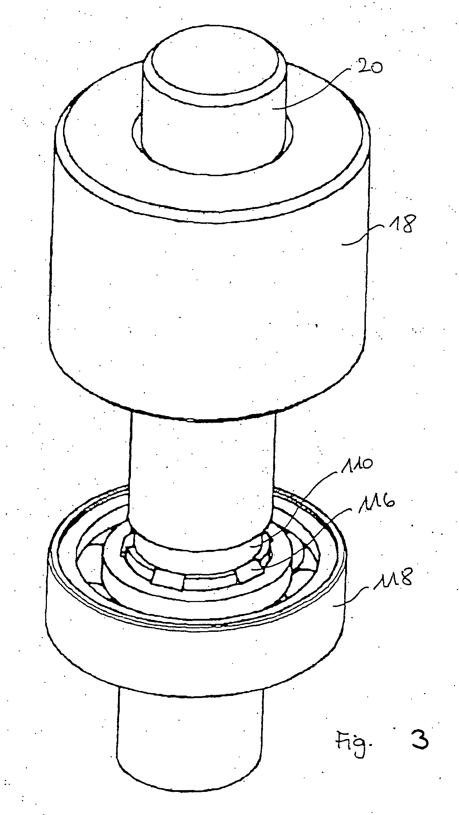

Fig. 2 zeigt eine schematische Schnittdarstellung der Anordnung aus dem Flansch 10 und der Rotorbaugruppe 18, die weitgehend einer vergrößerten Teilansicht der Fig. 1 entspricht. Der Stator 12 und der Gehäusedeckel 32 sind in dieser Darstellung weggelassen. Gleiche oder entsprechende Teile sind mit denselben Bezugszeichen bezeichnet und werden nicht nochmals beschrieben.

In der Darstellung der Fig. 2 ist insbesondere das Lagerspiel der Lager 26, 28 zu erkennen, das zu einer radialen Auslenkung der Welle 20 führen kann.

Ferner ist das Flachbandkabel 50 mit weiteren Einzelheiten dargestellt. Dieses Flachbandkabel 50 verbindet die Sensorvorrichtung 46 mit Anschlüssen in dem Gehäusedeckel 32. Es führt von der Sensorvorrichtung 46 durch die schräge Bohrung 52 zwischen dem Flansch 10 und der Phasenwicklung 16 des Stators (in Fig. 2 nicht gezeigt) hindurch und erstreckt sich entlang des Außenumfangs des Stators 12 (in Fig. 2 nicht gezeigt).

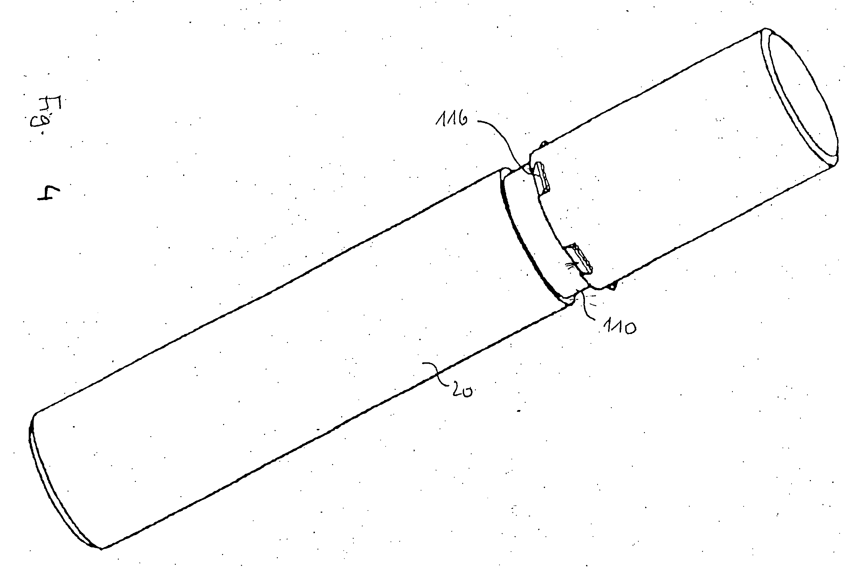

Fig. 3 und 4 zeigen schematisch in perspektivischer bzw. geschnittener Ansicht eine Einrichtung zur Herstellung einer axialen Sicherung an einer Welle, und Fig. 5 zeigt die bearbeitete Welle.

Fig. 3 zeigt schematisch eine Welle 20 mit einem Rotor 18, der auf der Welle montiert ist. In der Welle 20 ist eine ringförmige Nut 110 ausgebildet, wie auch in Fig. 5 dargestellt. Ein Halterungs- und Führungsblock 112 dient zum Halten der Welle 20 und Führen eines Verformungswerkzeuges 114, z.B. ein Stempel. Mit dem Verformungswerkzeug 114, das in der gezeigten Pfeilrichtung bewegt wird, wird entlang einer Kante der Nut 110 Material aus der Welle durch räumlich begrenzte plastische Verformung zu einem formschlüssigen Anschlag 116 (siehe Fig. 5) aufgeworfen.

Dieser formschlüssige Anschlag 116 dient als ein axialer Anschlag zum Montieren von Bauteilen auf der Welle. Der Anschlag wird mit minimalem Materialeinsatz und Aufwand für zusätzliche Teile realisiert. Dies stellt eine erhebliche Verbesserung gegenüber dem Stand der Technik dar. Aus dem Stand der Technik sind mehrere Arten der formschlüssigen Definition axialer Lagerpositionen bekannt. Beispielsweise kann an einem Drehteil ein Absatz hergestellt werden, der eine axiale Verschiebung verhindert. Es ist auch bekannt, einen Sicherungsring in eine Nut einzurasten. Die bekannten Methoden erfordern jedoch üblicherweise wenigstens die Verwendung mehrerer Bauteile oder ein Ausgangsmaterial für die Welle, das einen größeren Durchmesser als der Enddurchmesser der Welle hat. Mit der beschriebenen Methode werden an der Welle formschlüssige Anschläge für ein auf der Welle zu montierendes Bauteil gebildet, ohne zusätzliche Bauteile oder eine Welle mit einem größeren Ausgangsdurchmesser zu benötigen. Das Verfahren hat ferner den Vorteil, daß die Anschläge auch dann ausgebildet werden können, wenn auf der Welle bereits in einem früheren Arbeitsgang montierte Komponenten vorhanden sind. Bei diesen Komponenten kann es sich sogar um empfindliche Bauteile, wie Kugellager oder Magnetringe, handeln.

Fig. 6 zeigt schematisch die Welle 20 mit dem Rotor 18 und den an der Welle ausgebildeten Anschlägen 116, die zur axialen Positionierung eines Kugellagers 118 dienen.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichenliste

- 10: Grundplatte, Flansch
- 12: Stator
- 14: Statorkörper
- 16: Phasenwicklungen
- 18: Rotor
- 20: Welle
- 22: Rotormagnet
- 24: Eisenrückschluß
- 26, 28: Wälzlager
- 30: Motorgehäuse
- 32: Gehäusedeckel, Stirnkappe
- 34, 36: Anschlußbuchse
- 38: Anschlußstift
- 40: Wicklungen
- 42: Relaishalter
- 44.: Schaltrelais
- 46: Sensorvorrichtung
- 48: Signalgeber
- 50: Flachbandkabel
- 52: Bohrung

- 110: Nut
- 112: Halterungs- und Führungsblock
- 114: Verformungswerkzeug, Stempel
- 116: Anschlag
- 118: Kugellager

## Patentansprüche

1. Verfahren zum Herstellen eines Anschlags zur axialen Positionierung eines Bauteiles an einer Welle (20), bei dem mehrere Vorsprünge (116) durch plastische Verformung an der Welle (20) ausgebildet werden, die den Anschlag zum Positionierung des Bauteils (118) bilden, wobei in einem ersten Schritt auf dem Umfang der Welle (20) eine umlaufende Nut (110) eingeformt wird und in einem zweiten Schritt die Vorsprünge (116) durch plastische Verformung an einer Seitenkante der Nut (110) gebildet werden, wobei die Welle in einem Halterungs- und Führungsblock (112) gehalten wird und die Bewegung des Werkzeuges (114) beim Drücken gegen die Seitenkante der Nut (110) durch den Halterungs- und Führungsblock (112) geführt und räumlich begrenzt wird, um die plastische Verformung gegen den Halterungs- und Führungsblock auszubilden.

2. Verfahren nach Anspruch 1, **dadurch gekennzeichnet, daß** die Vorsprünge (116) mit einem Werkzeug (114) hergestellt werden, das auf die Seitenkante der Nut (110) einen Preßdruck ausübt und die Seitenkante (110) **dadurch** verformt.

3. Verfahren nach Anspruch 1 oder 2, **dadurch gekennzeichnet, daß** die Vorsprünge (116) auf dem Umfang der Welle (20) gleichmäßig verteilt ausgebildet werden.

## Claims

1. Method for producing a stop for axially positioning a component on a shaft (20), in which a plurality of projections (116) are formed on the shaft (20) by plastic deformation, said projections forming the stop for positioning the component (118), wherein, in a first step, a circular groove (110) is formed in the periphery of the shaft (20) and, in a second step, the projections (116) are formed at a side edge of the groove (110) by plastic deformation, wherein the shaft is held in a holding and guiding block (112) and the movement of the tool (114), when pressing against the side edge of the groove (110), is guided and locally limited by the holding and guiding block (112) for forming the plastic deformation against the holding and guiding block.

2. Method according to claim 1, **characterized in that** the projections (116) are produced using a tool (114) which exerts a forming pressure onto the side edge of the groove (110) and thus deforms the side edge (110).

3. Method according to claim 1 or 2, **characterized in that** the projections (116) are formed at regular intervals on the periphery of the shaft (20).

## Revendications

1. Procédé de réalisation d'une butée destinée au positionnement axial d'un composant sur un arbre (20), dans lequel plusieurs saillies (116) sont formées par déformation plastique sur l'arbre (20), qui constituent la butée pour le positionnement du composant (118), une rainure périphérique (110) étant réalisée au cours d'une première phase sur la périphérie de l'arbre (20), et les saillies (116) étant réalisées au cours d'une deuxième phase par déformation plastique d'un bord latéral de la rainure (110), l'arbre étant maintenu à cet effet dans un bloc de maintien et de guidage (112), et le déplacement de l'outil (114) lors de la pression exercée contre le bord latéral de la rainure (110) étant guidé par le bloc de maintien et de guidage (112) et étant limité dans l'espace, afin de réaliser la déformation plastique contre le bloc de maintien et de guidage.

2. Procédé selon la revendication 1, **caractérisé en ce que** les saillies (116) sont réalisées avec un outil (114), qui exerce une pression de compression sur le bord latéral de la rainure (110), et déforme ainsi le bord latéral (110).

3. Procédé selon la revendication 1 ou 2, **caractérisé en ce que** les saillies (116) sont réalisées en étant réparties uniformément sur la périphérie de l'arbre (20).
